# EUROPEAN PATENT APPLICATION

(11) **EP 4 604 433 A1**
(43) Date of publication of application: **20.08.2025**
(21) Application number: 22961747.7
(22) Date of filing: 13.10.2022
(51) Int. Cl.: H04L 5/00, H04W 36/28, H04W 76/15, H04W 8/24

(54) **COMMUNICATION METHOD, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2022/125175
(87) International publication number: WO 2024/077558

(57) **Abstract**

The embodiments of the present disclosure relate to the technical field of mobile communications. Provided are a communication method, an electronic device, and a storage medium. The communication method is applied to an access point device. The method comprises: sending a first radio frame in a sub-7 GHz frequency band, wherein the first radio frame carries first identification information; the first identification information comprises first bandwidth identification information; the first bandwidth identification information indicates a first target communication bandwidth of an access point device in a 45 GHz and/or 60 GHz frequency band or the maximum value of the first target communication bandwidth; and the first target communication bandwidth comprises 320 MHz. The embodiments of the present disclosure provide a transmission mode for improving the throughput of a system in UHR.

## Description

### FIELD

Embodiments of the present invention relate to the field of mobile communication technology, and more particularly to a communication method, an electronic device and a storage medium.

### BACKGROUND

With the rapid development of mobile communication technology, Wireless Fidelity (Wi-Fi) technology has made great progress in transmission rate and throughput. At present, research into the Wi-Fi technology involves the aspect of such as Ultra High Reliability (UHR), with the goal of improving the reliability of Wireless Local Area Networks (WLAN) connectivity, reducing latency, improving manageability, increasing throughput at different signal to noise ratio (SNR) levels, and reducing device level power consumption.

Therefore, in UHR, a transmission method that improves the throughput of the system is needed.

### SUMMARY

Embodiments of the present invention provide a communication method, an electronic device, and a storage medium, so as to provide a transmission method that improves the throughput of the system in UHR.

In one aspect, embodiments of the present invention provide a communication method, which is performed by an access point (AP), and the method includes: sending a first radio frame in a frequency band of sub 7 GHz; the first radio frame carries first identification information; the first identification information includes first bandwidth identification information, and the first bandwidth identification information indicates a first target communication bandwidth or a maximum first target communication bandwidth of the AP in a frequency band of 45 GHz and/or 60 GHz; and the first target communication bandwidth includes 320 MHz.

On another aspect, embodiments of the present invention further provide a communication method, which is performed by a station (STA), the method includes: sending a second radio frame in a frequency band of sub 7 GHz; the second radio frame carries second identification information; the second identification information includes second bandwidth identification information, and the second bandwidth identification information indicates a second target communication bandwidth or a maximum second target communication bandwidth of the STA in a frequency band of 45 GHz and/or 60 GHz; and the second target communication bandwidth includes 320 MHz.

On another aspect, embodiments of the present invention further provide an electronic device, the electronic device is an access point (AP), and the electronic device includes a first transmission module configured to send a first radio frame in a frequency band of sub 7 GHz; the first radio frame carries first identification information; the first identification information includes first bandwidth identification information, and the first bandwidth identification information indicates a first target communication bandwidth or a maximum first target communication bandwidth of the AP in a frequency band of 45 GHz and/or 60 GHz; and the first target communication bandwidth includes 320 MHz.

On another aspect, embodiments of the present invention further provide an electronic device, the electronic device is a station (STA), and the electronic device includes a second transmission module configured to send a second radio frame in a frequency band of sub 7 GHz; the second radio frame carries second identification information; the second identification information includes second bandwidth identification information, and the second bandwidth identification information indicates a second target communication bandwidth or a maximum second target communication bandwidth of the STA in a frequency band of 45 GHz and/or 60 GHz; and the second target communication bandwidth includes 320 MHz.

Embodiments of the present invention further provide an electronic device, which includes a memory, a processor, and computer programs stored in the memory and executable on the processor, and the processor is configured to perform the method as described in one or more of the embodiments of the present invention when executing the computer programs.

Embodiments of the present invention further provide a computer-readable storage medium, having stored therein computer programs that, when executed by a processor, cause the method as described in one or more of the embodiments of the present invention to be performed.

In embodiments of the present invention, the first bandwidth identification information indicates the first target communication bandwidth or the maximum first target communication bandwidth of the access point in the frequency band of 45 GHz and/or 60 GHz, that is, the first bandwidth identification information indicates the communication bandwidth supported by the AP, so as to facilitate subsequent communication according to the communication bandwidth, meet the requirements of UHR, and improve the device level throughput.

Additional aspects and advantages of the embodiments of the present invention will be partially given in the description below, become apparent from the description below, or will be learned through the practice of the present invention.

### BRIEF DESCRIPTION OF THE DRAWINGS

In order to more clearly illustrate the technical solutions in embodiments of the present invention, drawings to be used in the description of embodiments of the present invention will be briefly introduced below. Apparently, the drawings in the following description are only some embodiments of the present invention. For those of ordinary skill in the art, other drawings can be obtained based on these drawings without paying creative labor.
FIG. 1 is a first flowchart of a communication method according to an embodiment of the present invention;
FIG. 2 is a second flowchart of a communication method according to an embodiment of the present invention;
FIG. 3 is a first schematic block diagram of an electronic device according to an embodiment of the present invention;
FIG. 4 is a second schematic block diagram of an electronic device according to an embodiment of the present invention; and
FIG. 5 is a third schematic block diagram of an electronic device according to the embodiment of the present invention.

### DETAILED DESCRIPTION

In the embodiments of the present invention, the term "and/or" describes the association relationship of associated objects, indicating that three relationships may exist. For example, A and/or B may represent three situations: A exists alone, A and B exist at the same time, and B exists alone. The character "/" generally indicates that the associated objects before and after it are in a relationship of "or".

The term "a plurality of" in the embodiments of the present invention refers to two or more, and other quantifiers are similar thereto.

Reference will now be made in detail to illustrative embodiments of the present invention, examples of which are illustrated in the accompanying drawings. The following description refers to the accompanying drawings in which the same numbers in different drawings represent the same or similar elements unless otherwise represented. The implementations described in the following illustrative embodiments do not represent all implementations consistent with embodiments of the present invention. Instead, they are merely examples of devices and methods consistent with some aspects of the present invention as recited in the appended claims.

Terms used in embodiments of the present invention are for the purpose of describing specific embodiments, but should not be construed to limit the present invention. As used in the present invention and the appended claims, "a/an", "said" and "the" in singular forms are intended to include plural forms, unless clearly indicated in the context otherwise. It should also be understood that, the term "and/or" used herein represents and contains any one or any possible combinations of one or more associated items listed.

It should be understood that, although terms such as "first," "second" and "third" may be used in the present invention for describing various information, these information should not be limited by these terms. These terms are used for distinguishing information of the same type from each other. For example, first information may also be referred to as second information, and similarly, the second information may also be referred to as the first information, without departing from the scope of the present invention. Depending on the context, the term "if" as used herein may be construed to mean "when" or "upon" or "in response to determining".

The technical solutions in the embodiments of the present invention will be clearly and completely described below with reference to the drawings in the embodiments of the present invention. Apparently, the described embodiments are only part, instead all, of the embodiments of the present invention. Based on the embodiments in the present invention, all other embodiments obtained by those of ordinary skill in the art without making creative work are within the scope of protection of the present invention.

The embodiments of the present invention provide a communication method, an electronic device, and a storage medium, so as to provide a transmission method that improves the throughput of the system in UHR.

The method and the device are based on the same concept. Since the method and the device solve the problem in a similar principle, implementations of the device and the method can refer to each other, and the repeated parts will not be elaborated.

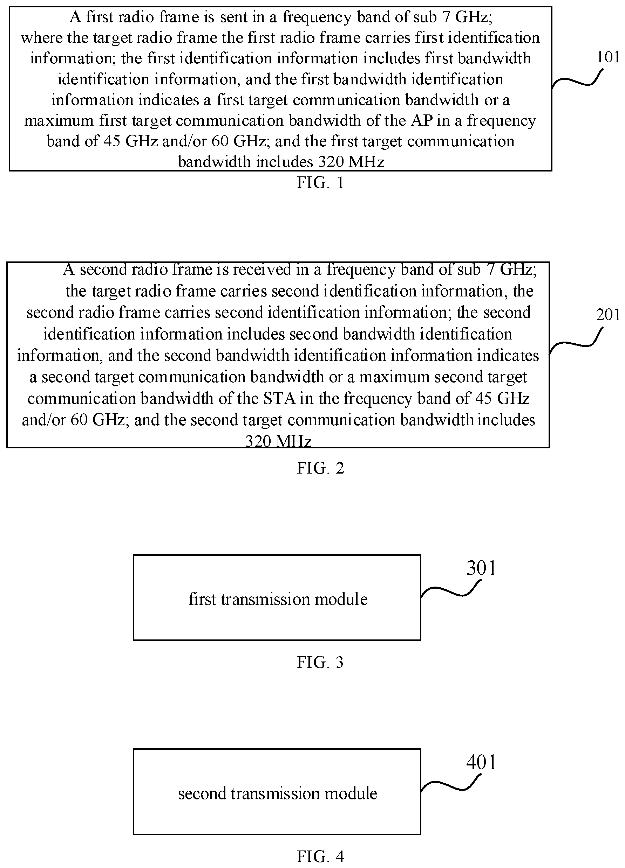

As shown in FIG. 1, embodiments of the present invention provide a communication method. Optionally, the method may be performed by an access point (AP). The method may include the following step.

In step 101, a first radio frame is sent in a frequency band of sub 7 GHz.

The first radio frame carries first identification information; the first identification information includes first bandwidth identification information, and the first bandwidth identification information indicates a first target communication bandwidth or a maximum first target communication bandwidth of the AP in a frequency band of 45 GHz and/or 60 GHz; and the first target communication bandwidth includes 320 MHz (megahertz).

Optionally, the first radio frame includes, for example, a beacon frame and/or a probe response frame; in the frequency band of sub 7 GHz (or sub-7 GHz), the access point (AP) sends the first radio frame to initially associate with a station (STA), and indicates the first target communication bandwidth in the frequency band of 45 GHz and/or 60 GHz through the first identification information, that is, it indicates a capability that the AP supports communications in both the frequency band of 7 GHz and the frequency band of 45 GHz and/or 60 GHz; it further indicates that the AP can communicate in both sub 7 GHz and 45/60 GHz, where sub 7 GHz includes frequency bands below 7 GHz, such as spectrum of 2.4 GHz, 5 GHz and 6 GHz.

The first bandwidth identification information may directly indicate a specific value of the first target communication bandwidth, such as 320 MHz; it may also indicates the maximum first target communication bandwidth, such as 2.56 GHz, where 2.56 GHz may be divided into eight portions each with a bandwidth of 320 MHz or four portions each with a bandwidth of 640 MHz.

The first target communication bandwidth includes 320 MHz, and 320 MHz is used as a basic communication bandwidth to improve the transmission rate and thus improve the throughput of the system. Normally, a bandwidth of at least 1.08 GHz can be provided in the bandwidth of 45 GHz for communication, and a bandwidth of at least 4.32 GHz or higher can be provided in the bandwidth of 60 GHz for communication. Therefore, in the embodiments of the present invention, the device is associated in the frequency band of at least sub 7 GHz in UHR. When the device needs to communicate at a high rate (high throughput), it may adopt both sub 7 GHz and 45/60 GHz to perform communications.

In the embodiments of the present invention, the first bandwidth identification information indicates the first target communication bandwidth or the maximum first target communication bandwidth of the AP in the frequency band of 45 GHz and/or 60 GHz, that is, the first bandwidth identification information indicates the communication bandwidths supported by the AP, so as to facilitate subsequent communication according to the communication bandwidths, meet the requirements of UHR, and improve the device level throughput.

Embodiments of the present invention provide a communication method. Optionally, the method may be performed by an AP. The method may include the following step.

A first radio frame is sent in a frequency band of sub 7 GHz.

The first radio frame carries first identification information; the first identification information includes first bandwidth identification information, and the first bandwidth identification information indicates a first target communication bandwidth or a maximum first target communication bandwidth of the AP in a frequency band of 45 GHz and/or 60 GHz; the first target communication bandwidth includes 320 MHz; and the first target communication bandwidth further includes at least one of: 80 MHz, 160 MHz, 640 MHz, or 1.28 GHz.

The first target communication bandwidth includes 320 MHz, and 320 MHz is used as the basic communication bandwidth. The first target communication bandwidth may be higher, such as 640 MHz or 1.28 GHz; or a lower bandwidth, such as 80 MHz or 160 MHz, may also be selected according to upper layer applications.

Embodiments of the present invention provide a communication method. Optionally, the method may be performed by an AP. The method may include the following step.

A first radio frame is sent in a frequency band of sub 7 GHz.

The first radio frame carries first identification information; the first identification information includes first bandwidth identification information, and the first bandwidth identification information indicates a first target communication bandwidth or a maximum first target communication bandwidth of the AP in a frequency band of 45 GHz and/or 60 GHz; the first target communication bandwidth includes 320 MHz; the first identification information further includes capability identification information, and the capability identification information indicates that the AP supports communication in the frequency band of 45 GHz and/or 60 GHz. For example, the capability identification information is "1", indicating that the AP supports communication in the frequency band of 45 GHz and/or 60 GHz, and the first identification information further carries the first bandwidth identification information; the capability identification information is "0", indicating that the AP does not support communication in the frequency band of 45 GHz and/or 60 GHz, and the first identification information may not carry the first bandwidth identification information.

As a first example, the format of the first identification information is as shown in Table 1 below.

**Table 1**

| | |
|---|---|
| capability identification information (Support 45 GHz/60 GHz Capabilities) | first identification information (BW Information or Maximum BW) |

Embodiments of the present invention provide a communication method. Optionally, the method may be performed by an AP. The method may include the following step.

A first radio frame is sent in a frequency band of sub 7 GHz.

The first radio frame carries first identification information; the first identification information includes first bandwidth identification information, and the first bandwidth identification information indicates a first target communication bandwidth or a maximum first target communication bandwidth of the AP in a frequency band of 45 GHz and/or 60 GHz; the first target communication bandwidth includes 320 MHz; and the first identification information is carried in an ultra high reliability (URH) capability information element.

The first radio frame, such as a beacon frame and/or a probe response frame, may add the URH capability information element in the beacon frame and/or the probe response frame, and carry the first identification information in the URH capability information element.

Embodiments of the present invention provide a communication method. Optionally, the method may be performed by an AP. The method may include the following step.

A first radio frame is sent in a frequency band of sub 7 GHz.

The first radio frame carries first identification information; the first identification information includes first bandwidth identification information, and the first bandwidth identification information indicates a first target communication bandwidth or a maximum first target communication bandwidth of the AP in a frequency band of 45 GHz and/or 60 GHz; the first target communication bandwidth includes 320 MHz; and the first identification information is carried in an ultra high reliability (URH) capability information element.

Further, the first identification information is carried in a physical layer (PHY) information field of the URH capability information element.

Optionally, in embodiments of the present invention, the method further includes: receiving a second radio frame in the frequency band of sub 7 GHz.

The second radio frame carries second identification information; the second identification information includes second bandwidth identification information, and the second bandwidth identification information indicates a second target communication bandwidth or a maximum second target communication bandwidth of a station (STA) in a frequency band of 45 GHz and/or 60 GHz; and the second target communication bandwidth includes 320 MHz.

Optionally, the second radio frame includes an association request frame and/or a probe request frame. In the frequency band of sub 7 GHz (or sub-7 GHz), the station (STA) sends the second radio frame to initially associate with an AP, and indicates the second target communication bandwidth in the frequency band of 45 GHz and/or 60 GHz through the second identification information, that is, it indicates a capability that the STA supports communications in both the frequency band of 7 GHz and the frequency band of 45 GHz and/or 60 GHz.

The second bandwidth identification information may directly indicate a specific value of the second target communication bandwidth, such as 320 MHz; it may also indicates the maximum second target communication bandwidth, such as 2.56 GHz, where 2.56 GHz may be divided into eight portions each with a bandwidth of 320 MHz or four portions each with a bandwidth of 640 MHz.

In the embodiments of the present invention, the AP indicates the first target communication bandwidth or the maximum first target communication bandwidth of the AP in the frequency band of 45 GHz and/or 60 GHz through the first bandwidth identification information, that is, the AP indicates the communication bandwidth supported by the AP through the first bandwidth identification information, so as to facilitate subsequent communication according to the communication bandwidth, meet the requirements of UHR, and improve the device level throughput.

Referring to FIG. 2, embodiments of the present invention provide a communication method. Optionally, the method may be performed by a STA. The method may include the following step.

In step 201, a second radio frame is sent in a frequency band of sub 7 GHz.

The second radio frame carries second identification information; the second identification information includes second bandwidth identification information, and the second bandwidth identification information indicates a second target communication bandwidth or a maximum second target communication bandwidth of the STA in a frequency band of 45 GHz and/or 60 GHz; and the second target communication bandwidth includes 320 MHz.

Optionally, the second radio frame includes an association request frame and/or a probe request frame. In the frequency band of sub 7 GHz (or sub-7 GHz), the station (STA) sends the second radio frame to initially associate with an AP, and indicates the second target communication bandwidth in the frequency band of 45 GHz and/or 60 GHz through the second identification information, that is, it indicates a capability that the STA supports communications in both the frequency band of 7 GHz and the frequency band of 45 GHz and/or 60 GHz.

The second bandwidth identification information may directly indicate a specific value of the second target communication bandwidth, such as 320 MHz; it may also indicate the maximum second target communication bandwidth, such as 2.56 GHz, where 2.56 GHz may be divided into eight portions each with a bandwidth of 320 MHz or four portions each with a bandwidth of 640 MHz.

The second target communication bandwidth includes 320 MHz, and 320 MHz is used as a basic communication bandwidth to improve the transmission rate and thus improve the throughput of the system. Normally, a bandwidth of at least 1.08 GHz can be provided in the bandwidth of 45 GHz for communication, and a bandwidth of at least 4.32 GHz or higher can be provided in the bandwidth of 60 GHz for communication. Therefore, in the embodiments of the present invention, the device is associated in the frequency band of at least sub 7GHz in UHR. When the device needs to communicate at a high rate (high throughput), it may adopt both sub 7 GHz and 45/60 GHz to perform communications.

Embodiments of the present invention provide a communication method. Optionally, the method may be performed by a station (STA). The method may include the following step.

A second radio frame is sent in a frequency band of sub 7 GHz; the second radio frame carries second identification information; the second identification information includes second bandwidth identification information, and the second bandwidth identification information indicates a second target communication bandwidth or a maximum second target communication bandwidth of the STA in a frequency band of 45 GHz and/or 60 GHz; and the second target communication bandwidth includes 320 MHz.

The second target communication bandwidth further includes at least one of: 80 MHz, 160 MHz, 640 MHz, or 1.28 GHz.

The second target communication bandwidth includes 320 MHz, and 320 MHz is used as the basic communication bandwidth. The second target communication bandwidth may be higher, such as 640 MHz or 1.28 GHz; or a lower bandwidth, such as 80 MHz or 160 MHz, may also be selected according to upper layer applications.

Embodiments of the present invention provide a communication method. Optionally, the method may be performed by a station (STA). The method may include the following step.

A second radio frame is sent in a frequency band of sub 7 GHz; the second radio frame carries second identification information; the second identification information includes second bandwidth identification information, and the second bandwidth identification information indicates a second target communication bandwidth or a maximum second target communication bandwidth of the STA in a frequency band of 45 GHz and/or 60 GHz; and the second target communication bandwidth includes 320 MHz.

The second identification information further includes capability identification information, and the capability identification information indicates that the STA supports communication in the frequency band of 45 GHz and/or 60 GHz.

The capability identification information indicates that the STA supports communication in the frequency band of 45 GHz and/or 60 GHz, for example, the capability identification information is "1", indicating that the STA supports communication in the frequency band of 45 GHz and/or 60 GHz, and the second identification information further carries the second bandwidth identification information; the capability identification information is "0", indicating that the STA does not support communication in the frequency band of 45 GHz and/or 60 GHz, and the second identification information may not carry the second bandwidth identification information.

As a second example, the format of the second identification information is as shown in Table 2 below.

**Table 2**

| | |
|---|---|
| capability identification information (Support 45 GHz/60 GHz Capabilities) | first identification information (BW Information or Maximum BW) |

Embodiments of the present invention provide a communication method. Optionally, the method may be performed by a station (STA). The method may include the following step.

A second radio frame is sent in a frequency band of sub 7 GHz; the second radio frame carries second identification information; the second identification information includes second bandwidth identification information, and the second bandwidth identification information indicates a second target communication bandwidth or a maximum second target communication bandwidth of the STA in a frequency band of 45 GHz and/or 60 GHz; and the second target communication bandwidth includes 320 MHz.

The second identification information is carried in an ultra high reliability (URH) capability information element, and the second radio frame, such as an association request frame and/or a probe request frame, may add the URH capability information element in the association request frame and/or the probe request frame, and carry the first identification information in the URH capability information element.

Embodiments of the present invention provide a communication method. Optionally, the method may be performed by a station (STA). The method may include the following step.

A second radio frame is sent in a frequency band of sub 7 GHz; the second radio frame carries second identification information; the second identification information includes second bandwidth identification information, and the second bandwidth identification information indicates a second target communication bandwidth or a maximum second target communication bandwidth of the STA in a frequency band of 45 GHz and/or 60 GHz; and the second target communication bandwidth includes 320 MHz.

The second identification information is carried in an ultra high reliability (URH) capability information element; and the second identification information is carried in a physical layer (PHY) information field of the URH capability information element.

Optionally, in the embodiments of the present invention, the method further includes: receiving a first radio frame in the frequency band of sub 7 GHz; the first radio frame carries first identification information; the first identification information includes first bandwidth identification information, and the first bandwidth identification information indicates a first target communication bandwidth or a maximum first target communication bandwidth of an AP in the frequency band of 45 GHz and/or 60 GHz; and the first target communication bandwidth includes 320 MHz.

Optionally, the first radio frame includes, for example, a beacon frame and/or a probe response frame; in the frequency band of sub 7 GHz (or sub-7 GHz), the access point (AP) sends the first radio frame to initially associate with the station (STA), and indicates the first target communication bandwidth in the frequency band of 45 GHz and/or 60 GHz through the first identification information, that is, it indicates a capability that the AP supports communications in both the frequency band of 7 GHz and the frequency band of 45 GHz and/or 60 GHz.

In the embodiments of the present invention, the STA indicates the second target communication bandwidth or the maximum first target communication bandwidth of the AP in the frequency band of 45 GHz and/or 60 GHz through the second bandwidth identification information, that is, the STA indicates the communication bandwidth supported by the STA through the second bandwidth identification information, so as to facilitate subsequent communication according to the communication bandwidth, meet the requirements of UHR, and improve the device level throughput.

Referring to FIG. 3, based on the same principle as the method provided in the embodiments of the present invention, embodiments of the present invention further provide an electronic device, which is an access point (AP) and includes a first transmission module 301 that is configured to send a first radio frame in a frequency band of sub 7 GHz. The first radio frame carries first identification information; the first identification information includes first bandwidth identification information, and the first bandwidth identification information indicates a first target communication bandwidth or a maximum first target communication bandwidth of the AP in a frequency band of 45 GHz and/or 60 GHz; and the first target communication bandwidth includes 320 MHz.

Optionally, in embodiments of the present invention, the first target communication bandwidth further includes at least one of: 80 MHz, 160 MHz, 640 MHz, or 1.28 GHz.

Optionally, in embodiments of the present invention, the first identification information further includes capability identification information, and the capability identification information indicates that the AP supports communication in the frequency band of 45 GHz and/or 60 GHz.

Optionally, in embodiments of the present invention, the first identification information is carried in an ultra high reliability (URH) capability information element.

Optionally, in embodiments of the present invention, the first identification information is carried in a physical layer (PHY) information field of the URH capability information element.

Optionally, in embodiments of the present invention, the first radio frame includes a beacon frame and/or a probe response frame.

Optionally, in embodiments of the present invention, the electronic device further includes a second receiving module that is configured to receive a second radio frame in the frequency band of sub 7 GHz; the second radio frame carries second identification information; the second identification information includes second bandwidth identification information, and the second bandwidth identification information indicates a second target communication bandwidth or a maximum second target communication bandwidth of a station (STA) in the frequency band of 45 GHz and/or 60 GHz; and the second target communication bandwidth includes 320 MHz.

Embodiments of the present invention further provide a communication apparatus, which is applied to an access point (AP) and includes a first radio frame transmitting module that is configured to send a first radio frame in a frequency band of sub 7 GHz; the first radio frame carries first identification information; the first identification information includes first bandwidth identification information, and the first bandwidth identification information indicates a first target communication bandwidth or a maximum first target communication bandwidth of the AP in a frequency band of 45 GHz and/or 60 GHz; and the first target communication bandwidth includes 320 MHz.

The apparatus further includes other modules of the electronic device in the aforementioned embodiments, which will not be repeated here.

Referring to FIG. 4, based on the same principle as the method provided in the embodiments of the present invention, embodiments of the present invention further provide an electronic device, which is a station (STA) and includes a second transmission module 401 that is configured to send a second radio frame in a frequency band of sub 7 GHz; the second radio frame carries second identification information; the second identification information includes second bandwidth identification information, and the second bandwidth identification information indicates a second target communication bandwidth or a maximum second target communication bandwidth of the STA in a frequency band of 45 GHz and/or 60 GHz; and the second target communication bandwidth includes 320 MHz.

Optionally, in embodiments of the present invention, the second target communication bandwidth further includes at least one of: 80 MHz, 160 MHz, 640 MHz, or 1.28 GHz.

Optionally, in embodiments of the present invention, the second identification information further includes capability identification information, and the capability identification information indicates that the STA supports communication in the frequency band of 45 GHz and/or 60 GHz.

Optionally, in embodiments of the present invention, the second identification information is carried in an ultra high reliability (URH) capability information element.

Optionally, in embodiments of the present invention, the second identification information is carried in a physical layer (PHY) information field of the URH capability information element.

Optionally, in embodiments of the present invention, the second radio frame includes an association request frame and/or a probe request frame.

Optionally, in embodiments of the present invention, the electronic device further includes a first receiving module that is configured to receive a first radio frame in the frequency band of sub 7 GHz; the first radio frame carries first identification information; the first identification information includes first bandwidth identification information, and the first bandwidth identification information indicates a first target communication bandwidth or a maximum first target communication bandwidth of an access point (AP) in the frequency band of 45 GHz and/or 60 GHz; and the first target communication bandwidth includes 320 MHz.

Embodiments of the present invention further provide a communication apparatus, which is applied to a station (STA) and includes a second radio frame transmitting module that is configured to send a second radio frame in a frequency band of sub 7 GHz; the second radio frame carries second identification information; the second identification information includes second bandwidth identification information, and the second bandwidth identification information indicates a second target communication bandwidth or a maximum second target communication bandwidth of the STA in a frequency band of 45 GHz and/or 60 GHz; and the second target communication bandwidth includes 320 MHz.

The apparatus further includes other modules of the electronic device in the aforementioned embodiments, which will not be repeated here.

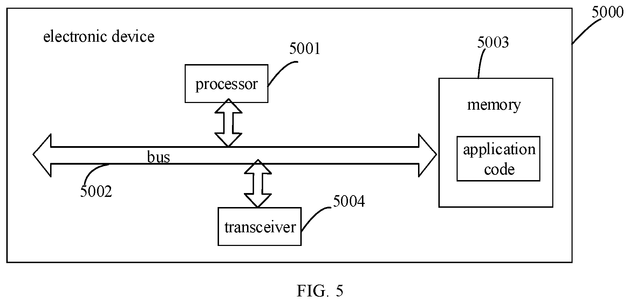

In an optional embodiment, the embodiment of the present invention further provides an electronic device, as shown in FIG. 5. The electronic device 500 shown in FIG. 5 may be a server, including a processor 501 and a memory 503. The processor 501 and the memory 503 are connected, for example, via a bus 502. Optionally, the electronic device 500 may further include a transceiver 504. It should be noted that in actual applications, the number of the transceivers 504 is not limited to one, and the structure of the electronic device 500 does not constitute a limitation on the embodiments of the present invention.

The processor 501 may be a central processing unit (CPU), a general-purpose processor, a digital signal processor (DSP), an application specific integrated circuit (ASIC), a field programmable gate array (FPGA), or other programmable logic devices, transistor logic devices, hardware components, or any combination thereof. The processor 501 may implement or execute various exemplary logical blocks, modules, and circuits described in conjunction with the contents of the present invention. The processor 501 may also be a combination that implements computing functions, such as a combination of one or more microprocessors, a combination of a DSP and a microprocessor, etc.

The bus 502 may include a path to transmit information between the above components. The bus 502 may be a peripheral component interconnect (PCI) bus, an extended industry standard architecture (EISA) bus, or the like. The bus 502 can be divided into an address bus, a data bus, a control bus, etc. For ease of representation, FIG. 5 illustrates only one thick line to represent the bus 502, but this does not mean that there is only one bus or one type of bus.

The memory 503 may be a read only memory (ROM) or other types of static storage devices that may store static information and instructions, or a random access memory (RAM) or other types of dynamic storage devices that may store information and instructions; and the memory 503 may also be an electrically erasable programmable read only memory (EEPROM), a compact disc read only memory (CD-ROM), or other optical disk storage media or optical disc storage media (including a compressed optical disk, a laser disk, an optical disk, a digital versatile disk, a Blu-ray disk, etc.), a magnetic disk storage medium or other magnetic storage devices, or any other medium that may be used to carry or store the desired program codes in the form of instructions or data structures and may be accessed by a computer, but is not limited thereto.

The memory 503 is configured to store application program codes for executing the solution of the present invention, and the execution is controlled by the processor 501. The processor 501 is used to execute the application program codes stored in the memory 503 to implement the contents shown in the aforementioned method embodiments.

The electronic device includes, but is not limited to: a mobile terminal such as a mobile phone, a laptop, a digital broadcast receiver, a personal digital assistant (PDA), a tablet computer (PAD), a portable multimedia player (PMP), a vehicle-mounted terminal (such as a vehicle-mounted navigation terminal), etc.; and a fixed terminal such as a digital television (TV), a desktop computer, etc. The electronic device shown in FIG. 5 is merely an example and should not limit the functions and use scope of the embodiments of the present invention in any way.

The server provided in the present invention may be an independent physical server, a server cluster or a distributed system composed of a plurality of physical servers, or a cloud server that provides basic cloud computing services such as cloud services, cloud databases, cloud computing, cloud functions, cloud storage, network services, cloud communications, middleware services, domain name services, security services, content distribution network (CDN), as well as big data and artificial intelligence platforms. The terminal may be a smart phone, a tablet computer, a laptop computer, a desktop computer, a smart speaker, a smart watch, etc., but is not limited thereto. The terminal and the server may be connected directly or indirectly via wired or wireless communication, which is not limited in the present invention.

An embodiment of the present invention provides a computer-readable storage medium, on which a computer program is stored. When the computer program runs on a computer, the computer may execute the corresponding contents in the aforementioned method embodiments.

It should be understood that, although the steps in the flowcharts of the accompanying drawings are displayed sequentially as indicated by the arrows, these steps are not necessarily executed sequentially in an order indicated by the arrows. Unless otherwise specified herein, there is no strict order limitation for the execution of these steps, and these steps may be executed in other orders. Moreover, at least some of the steps in the flowcharts of the accompanying drawings may include a plurality of sub-steps or a plurality of stages. These sub-steps or stages are not necessarily executed at the same time, but may be executed at different times. The order of execution of these steps is not necessarily sequential, but these steps may be executed in turn or alternately with other steps or at least some of sub-steps or stages of other steps.

It should be noted that the above-mentioned computer-readable medium in the present invention may be a computer-readable signal medium, or a computer-readable storage medium, or any combination of the above two media. The computer-readable storage medium may be, for example, but is not limited to, an electronic, magnetic, optical, electromagnetic, infrared, or semiconducting system, apparatus, or device, or any combination of the foregoing. The more specific examples of the computer-readable storage medium may include, but are not limited to, an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing. In the present invention, the computer-readable storage medium may be any tangible medium that contains or stores a program for use by or in connection with an instruction execution system, apparatus, or device. In the present invention, the computer-readable signal medium may include a data signal propagated in a baseband or as a part of a carrier wave, in which computer-readable program codes are carried. Such a propagated data signal may take a variety of forms, including but not limited to electromagnetic signals, optical signals, or any suitable combination of the foregoing. The computer-readable signal medium may also be any computer-readable medium other than computer-readable storage media, which may send, propagate or transport a program for use by or in conjunction with an instruction execution system, apparatus or device. The program code embodied on the computer-readable medium may be transmitted using any appropriate medium, including but not limited to: a wire, an optical cable, a radio frequency (RF), or the like, or any suitable combination of the foregoing.

The above-mentioned computer-readable medium may be included in the above-mentioned electronic device, or may exist independently without being incorporated into the electronic device.

The above-mentioned computer-readable medium carries one or more programs. When the one or more programs are executed by the electronic device, the electronic device executes the method shown in the above embodiments.

According to one aspect of the present invention, a computer program product or a computer program is provided, including computer instructions stored in a computer-readable storage medium. A processor of a computer device reads the computer instructions from the computer-readable storage medium and executes the computer instructions, so that the computer device executes the method in the above various optional implementations.

The computer program codes for performing operations in the present invention may be written in one or more programming languages or their combination, including object-oriented programming languages such as Java, Smalltalk, C++, or conventional procedural programming languages such as "C" language or similar programming languages. The program codes may be executed entirely on a user computer, partly on the user computer, as a stand-alone software package, partly on the user computer and partly on a remote computer, or entirely on the remote computer or a server. In case of involving a remote computer, the remote computer may be connected to the user computer through any type of network, including a local area network (LAN) or a wide area network (WAN), or may be connected to an external computer (e.g., through the Internet using an Internet service provider).

The flowcharts and block diagrams in the accompanying drawings illustrate possibly implemented architectures, functions, and operations of systems, methods, and computer program products according to various embodiments of the present invention. In this regard, each block in the flowchart or block diagram may represent a module, a program segment, or a portion of code, which contains one or more executable instructions for implementing the specified logical functions. It should also be noted that, in some alternative implementations, the functions noted in the block may occur out of the order noted in the drawings. For example, two blocks shown in succession may actually be executed substantially in parallel, or they may sometimes be executed in the reverse order, depending on the functionality involved. It should also be noted that each block in the block diagram and/or flowchart, and a combination of blocks in the block diagram and/or flowchart, may be implemented by a dedicated hardware-based system that performs the specified functions or operations, or may be implemented by a combination of dedicated hardware and computer instructions.

The modules described and involved in the embodiments of the present invention may be implemented in software or hardware. The name of a module does not, in some cases, constitute a limitation on the module itself. For example, module A may also be described as "module A for performing operation B".

The above describes preferred embodiments of the present invention and the technical principles used. Those skilled in the art should understand that the scope of the present invention involved in the present invention is not limited to the technical solutions formed by a specific combination of the above-mentioned technical features, but should also cover other technical solutions formed by any combination of the above-mentioned technical features or their equivalent features without departing from the above-mentioned concepts of the present invention. For example, the above-mentioned features are replaced with the technical features with similar functions disclosed in the present invention (but not limited to this) to form a technical solution.

## Claims

1. A communication method, performed by an access point, comprising:
sending a first radio frame in a frequency band of sub 7 GHz;
wherein the first radio frame carries first identification information;
the first identification information comprises first bandwidth identification information, and the first bandwidth identification information indicates a first target communication bandwidth or a maximum first target communication bandwidth of the access point in a frequency band of 45 GHz and/or 60 GHz; and the first target communication bandwidth comprises 320 MHz.

2. The communication method according to claim 1, wherein the first target communication bandwidth further comprises at least one of:
80 MHz, 160 MHz, 640 MHz, or 1.28 GHz.

3. The communication method according to claim 1, wherein the first identification information further comprises capability identification information, and the capability identification information indicates that the access point supports communication in the frequency band of 45 GHz and/or 60 GHz.

4. The communication method according to claim 1, wherein the first identification information is carried in an ultra high reliability (URH) capability information element.

5. The communication method according to claim 4, wherein the first identification information is carried in a physical layer (PHY) information field of the URH capability information element.

6. The communication method according to claim 1, wherein the first radio frame comprises a beacon frame and/or a probe response frame.

7. The communication method according to claim 1, further comprising:
receiving a second radio frame in the frequency band of sub 7 GHz;
wherein the second radio frame carries second identification information;
the second identification information comprises second bandwidth identification information, and the second bandwidth identification information indicates a second target communication bandwidth or a maximum second target communication bandwidth of a station in the frequency band of 45 GHz and/or 60 GHz; and the second target communication bandwidth comprises 320 MHz.

8. A communication method, performed by a station, comprising:
sending a second radio frame in a frequency band of sub 7 GHz;
wherein the second radio frame carries second identification information;
the second identification information comprises second bandwidth identification information, and the second bandwidth identification information indicates a second target communication bandwidth or a maximum second target communication bandwidth of the station in a frequency band of 45 GHz and/or 60 GHz; and the second target communication bandwidth comprises 320 MHz.

9. The communication method according to claim 8, wherein the second target communication bandwidth further comprises at least one of:
80 MHz, 160 MHz, 640 MHz, or 1.28 GHz.

10. The communication method according to claim 8, wherein the second identification information further comprises capability identification information, and the capability identification information indicates that the station supports communication in the frequency band of 45 GHz and/or 60 GHz.

11. The communication method according to claim 8, wherein the second identification information is carried in an ultra high reliability (URH) capability information element.

12. The communication method according to claim 11, wherein the second identification information is carried in a physical layer (PHY) information field of the URH capability information element.

13. The communication method according to claim 8, wherein the second radio frame comprises an association request frame and/or a probe request frame.

14. The communication method according to claim 8, further comprising:
receiving a first radio frame in the frequency band of sub 7 GHz;
wherein the first radio frame carries first identification information;
the first identification information comprises first bandwidth identification information, and the first bandwidth identification information indicates a first target communication bandwidth or a maximum first target communication bandwidth of an access point in a frequency band of 45 GHz and/or 60 GHz; and the first target communication bandwidth comprises 320 MHz.

15. An electronic device, as an access point, comprising:
a first transmission module, configured to send a first radio frame in a frequency band of sub 7 GHz;
wherein the first radio frame carries first identification information;
the first identification information comprises first bandwidth identification information, and the first bandwidth identification information indicates a first target communication bandwidth or a maximum first target communication bandwidth of the access point in a frequency band of 45 GHz and/or 60 GHz; and the first target communication bandwidth comprises 320 MHz.

16. An electronic device, as a station, comprising:
a second transmission module, configured to send a second radio frame in a frequency band of sub 7 GHz;
wherein the second radio frame carries second identification information;
the second identification information comprises second bandwidth identification information, and the second bandwidth identification information indicates a second target communication bandwidth or a maximum second target communication bandwidth of a station in the frequency band of 45 GHz and/or 60 GHz; and the second target communication bandwidth comprises 320 MHz.

17. An electronic device, comprising:
a memory,
a processor, and
computer programs, stored in the memory and executable on the processor,
wherein the processor is configured to perform the method according to any one of claims 1 to 7 or the method according to any one of claims 8 to 14 when executing the computer programs.

18. A computer-readable storage medium, having stored therein computer programs that, when executed by a processor, cause the method according to any one of claims 1 to 7 or the method according to any one of claims 8 to 14 to be performed.
